# EUROPEAN PATENT APPLICATION

(11) **EP 1 308 808 A2**
(43) Date of publication of application: **07.05.2003**
(21) Application number: 02079122.4
(22) Date of filing: 04.10.2002
(51) Int. Cl.: G05B 19/18, B21D 5/04

(54) **High performance machine with reduced setting-up time for programmed sheet bending**

(30) Priority: 10.10.2001 JP 2001006594 U
(71) Applicant: SALVAGNINI ITALIA S.p.A., I-36040 Sarego (Vicenza) (IT)
(72) Inventor: Kunze, Wolfgang, 4060 Leonding (AT)
(74) Representative: Mittler, Enrico

(57) **Abstract**

A sheet metal bending machine with a bending unit (8) driven by actuators (12, 15) comprises a data processing system including a technological bending database (26) which is programmed to represent the behaviour of the machine-sheet assembly under the bending process, said database (26) being provided with a predefined stored set of sheet metal angle (A) and thickness (T) data and supplied with nominal angle and thickness data (23, 24) of the sheet metal (3) to be bent, a material characteristic database (27) provided with a predefined set of sheet metal material data and supplied with material type data (25) of the sheet metal (3) to be bent, a machine geometry database (28) provided with a predefined set of geometrical data of the bending machine. A mathematical model calculation algorithm (29) calculates the movements of the bending unit actuators (12, 15) according to processed data provided by said databases (26, 27, 28) and sheet metal length (L) data (22) of the sheet metal (3) to be bent. A mathematical model recalculation algorithm (33) recalculates the movements of the bending unit actuators (12, 15) according to measured thickness data (32) provided by thickness measuring means (19) and calculated data from said calculation algorithm (29).

## Description

This invention refers to a machine for programmed sheet bending of the general type known in the art as panel bender.

The panel benders are able to automatically move a sheet metal blank on a horizontal surface placed in front of a bending press provided with a bending unit with one or two bending blades, which is able to perform a number of bends of variable size, angle and direction on each side of the blank. The bending press also comprises a fixed counter-blade and a blank-holder of variable size which cooperates with the counter-blade for clamping the blank near the edge to be bent. The bending unit and the blank-holder are activated by controlled hydraulic cylinders. An example of this state of the art is given by the European patent EP-A-0293964.

The advantages of this machine reside in the constant production rate and the production and programming flexibility. A few drawbacks, however, are encountered.

In particular, a drawback consists in the lost setting-up time (with consequent production of waste panels) which is necessary for the adjustment of the machine according to the thickness and the type of material of the sheet metal used.

The object of the present invention is to eliminate this drawback so as to give the machine the attribute of the high performance panel bender.

According to the invention this object is reached by a sheet metal bending machine with a bending unit driven by actuators, characterised by comprising a data processing system including:
- a technological bending database which is programmed to represent the behaviour of the machine-sheet assembly under the bending process, said database being provided with a predefined stored set of sheet metal angle and thickness data and supplied with nominal angle and thickness data of the sheet metal to be bent,
- a material characteristic database provided with a predefined set of sheet metal material data and supplied with material type data of the sheet metal to be bent,
- a machine geometry database provided with a predefined set of geometrical data of the bending machine,
- a mathematical model calculation algorithm for calculating the movements of the bending unit actuators according to processed data provided by said databases and sheet metal length data of the sheet metal to be bent,
- thickness measuring means for measuring the thickness of the sheet metal to be bent, and
- a mathematical model recalculation algorithm for recalculating the movements of the bending unit actuators according to measured thickness data provided by said thickness measuring means and calculated data from said calculation algorithm.

Thanks to a mathematical model calculation based on nominal input data, an accurate measurement of the sheet metal thickness at the beginning of each bending cycle of a batch of panels and a mathematical model recalculation based on the measured thickness it is thus possible to guarantee dimensional repeatability of the panels produced, reduced setting up time and no waste because the first panel of a new batch will immediately be a good panel.

An embodiment of the present invention is shown by way of non-limiting example in the accompanying drawings, in which:
Fig 1 shows the mechanical part of a bending press;
Fig. 2 shows a sheet metal being bent with a thickness measurer associated therewith;
Fig. 3 shows a block scheme of a data processing system which causes the bending press to operate according to the invention.

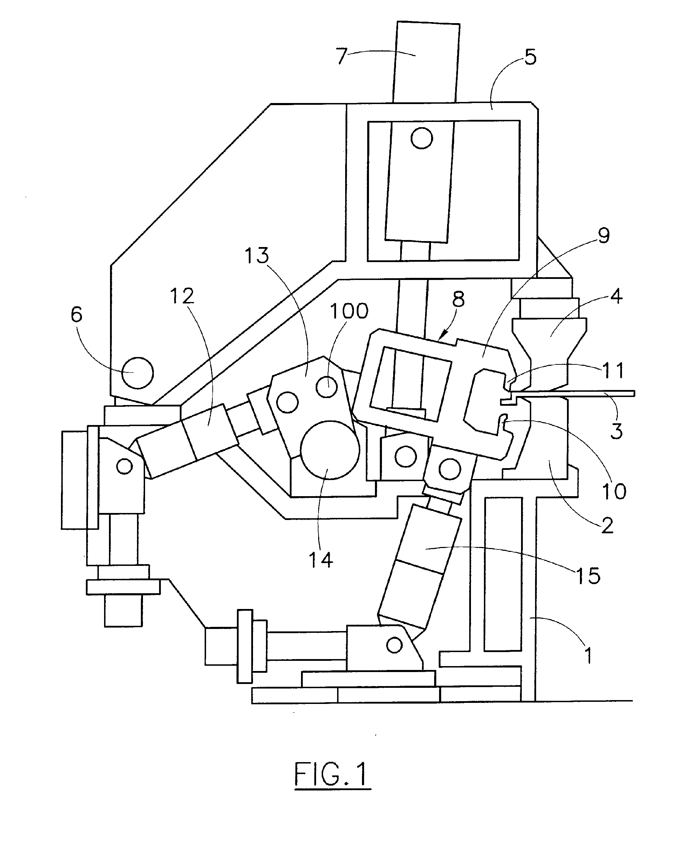

The bending press shown in Fig. 1 comprises a fixed base 1, which supports a counter-blade 2 on which a lateral edge of a sheet metal blank 3 moved by a manipulator (not shown) rests.

A blank-holder 4 cooperates with the counter-blade 3 to clamp the sheet metal edge. The blank-holder is attached to the front end of a movable support 5, which has a rear end hinged at 6 on a rear part of the fixed base 1. The support 5 is moved up and down by a plurality of hydraulic cylinders 7 which react on the fixed base 1.

A bending unit 8 comprises a common support 9 for two bending blades 10 and 11 which cooperate with the counter-blade 2 to cause up and down bending of the clamped edge of the sheet metal. The bending unit is subjected to combined horizontal and vertical movements by hydraulic actuators formed by hydraulic cylinders 12 interposed between the rear part of the base 1 and a lever 13 having a fixed hinge 14 and a mobile hinge 100, and by further hydraulic cylinders 15 interposed between the blade support 9 and the fixed base 1.

The hydraulic cylinders 12 and 15 are controlled by a variable displacement hydraulic pump (not shown in the drawings).

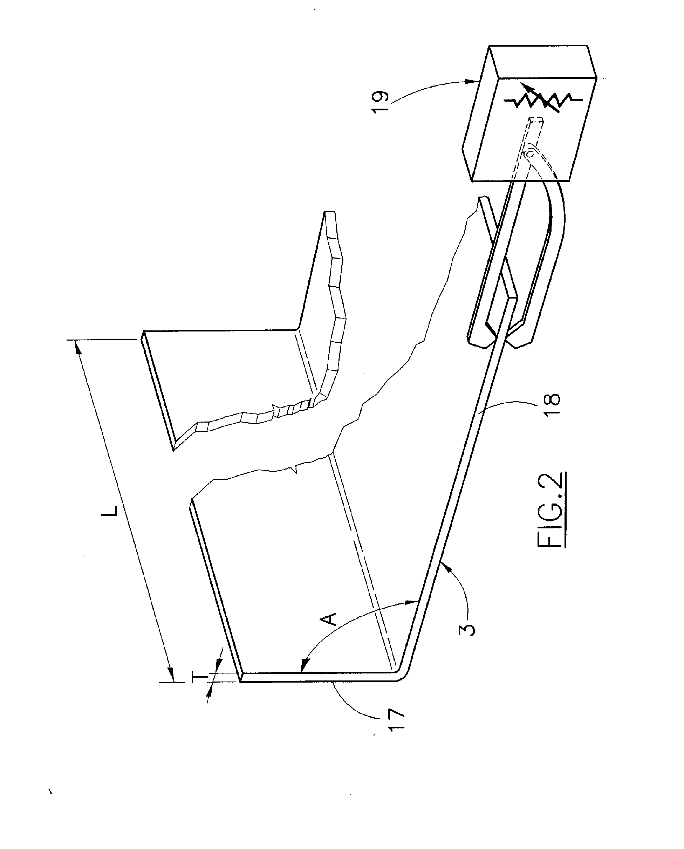

Fig. 2 shows a side of the sheet metal 3, which has a bent edge 17 which forms an exemplary angle A of 90° with the adjacent horizontal part 18 of the sheet metal. T designates the thickness of the sheet metal and L designates the length of the bent edge 17. T and L influence the bending angle A.

A thickness measurer 19 of a potentiometer type or other possible types is provided for accurate measurement of the thickness T and the strain of the sheet metal 3. The measurer 19 is possibly capable of measuring the sheet metal strain also.

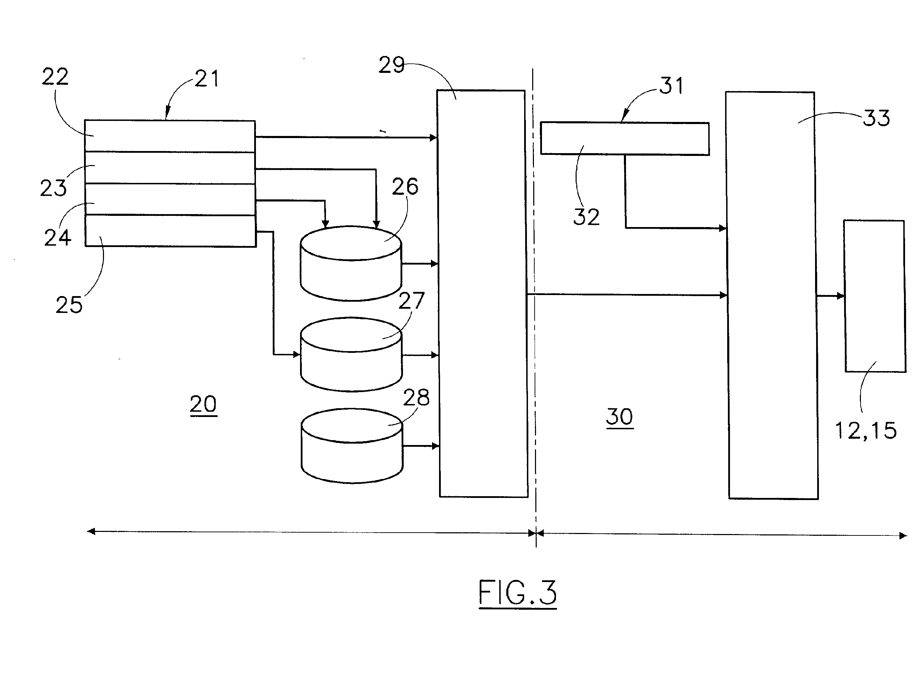

Fig. 3 shows a block scheme of the data processing system which causes the bending press to operate according to the invention.

As shown in Fig. 3, the data processing system has an offline part 20 including an operator input 21 which comprises the edge length data 22, the edge angle data 23, the nominal sheet thickness data 24 and the material type data 25 of the sheet metal to be bent.

The angle data 23 and the nominal sheet thickness data 24 are supplied to a technological bending database 26 which is programmed to represent the behaviour of the machine-sheet assembly under the bending process. The database 26 is provided with a predefined stored set of angle and thickness data of a number of possible sheet metals to be bent and is based on FEM (finite element method) computerised analyses. The technological bending database processes the operator input data according to the program and data stored therein.

The material type data 25 are in turn supplied to a material characteristic database 27 which is provided with a predefined stored set of material data of a number of possible sheet metals to be bent and effects an interpolation of the operator input data with the predefined set of data stored therein.

A machine geometry database 28 provided with a predefined stored set of geometrical data of the bending machine is also included in the data processing system of Fig. 3.

The length data 22, the data processed by the technological bending database 26, the data processed by the material characteristic database 27 and the output data of the machine geometry database 28 are supplied to a calculation software algorithm 29, which is able to calculate the movements of the actuators of the machine according to a special mathematical model bending formulary.

The data processing system further includes an online part 30 which comprises a dynamic input 31 with real sheet thickness (and possibly strain) data 32 provided by the thickness (and possibly strain) measurer 19. The real thickness data 32 and the calculated data provided by the calculation software algorithm 29 are supplied to a real time recalculation software algorithm 33, which is able to recalculate the movements of the actuators 12, 15 of the bending unit according to a special mathematical model bending formulary.

In other words, after a first calculation based on input data provided by the operator and the processed data from suitable databases, an accurate measurement of the real thickness of the sheet metal being processed is carried out by a recalculation software algorithm based on a mathematical model of the technological behaviour of the sheets to be bent. The accurate measurement of the thickness is performed at the beginning of each bending cycle of a panel type.

Among the data which can be programmed and are required by each bend, two are common for all bends of the whole blank, i.e. the thickness and the type of the material such as steel, aluminium, iron, etc. The behaviour of the material caused to bend by the bending unit is deduced from the data experimented in the laboratory and FEM (finite element method) computerised analyses.

The technological database and the mathematical model of the technological behaviour are based on these principles. The thickness of the sheet metal strongly influences in a non-linear way the bending force and, consequently, the thickness tolerance has significant effects on the accuracy of the bending angle programmed and desired. The accurate measurement of the thickness before each work cycle and the continuous recalculation by an algorithm based on the mathematical model guarantees the correct bending angle as programmed without performing any adjustment cycle and without producing any waste panel. The invention therefore guarantees that the first part of a new production batch is a good part compliant with the programmed one. A traditional panel bender without the device for accurate thickness measurement of the sheet and without the mathematical model of the technological behaviour, on the contrary, requires the execution of several waste panels for the adjustment of the exact bending angles.

## Claims

1. Sheet metal bending machine with a bending unit (8) driven by actuators (12, 15), **characterised by** comprising a data processing system including:
- a technological bending database (26) which is programmed to represent the behaviour of the machine-sheet assembly under the bending process, said database (26) being provided with a predefined stored set of sheet metal angle (A) and thickness (T) data and supplied with nominal angle and thickness data (23, 24) of the sheet metal (3) to be bent,
- a material characteristic database (27) provided with a predefined set of sheet metal material data and supplied with material type data (25) of the sheet metal (3) to be bent,
- a machine geometry database (28) provided with a predefined set of geometrical data of the bending machine,
- a mathematical model calculation algorithm (29) for calculating the movements of the bending unit actuators (12, 15) according to processed data provided by said databases (26, 27, 28) and sheet metal length (L) data (22) of the sheet metal (3) to be bent,
- thickness measuring means (19) for measuring the thickness of the sheet metal (3) to be bent, and
- a mathematical model recalculation algorithm (33) for recalculating the movements of the bending unit actuators (12, 15) according to measured thickness data (32) provided by said thickness measuring means (19) and calculated data from said calculation algorithm (29).

2. Sheet metal bending machine according to claim 1, **characterized in that** said technological bending database (26) is based on FEM (finite element method) computerised analyses.

3. Sheet metal bending machine according to claim 1, **characterized in that** said technological bending database (26), said material characteristic database (27), said machine constants database (28) and said mathematical model calculation algorithm (29) are comprised in an offline part (20) of the data processing system.

4. Sheet metal bending machine according to claim 3, **characterized in that** said mathematical model recalculation algorithm (33) is comprised in an online part (30) of the data processing system.

5. Sheet metal bending machine according to claim 1, **characterized in that** said thickness measurer (31) is also capable of measuring the sheet metal strain.
